# EUROPÄISCHE PATENTANMELDUNG

(11) **EP 2 423 398 A1**
(43) Veröffentlichungstag der Anmeldung: **29.02.2012**
(21) Anmeldenummer: 10008755.0
(22) Anmeldetag: 23.08.2010
(51) Int. Cl.: E04B 1/70, E04B 1/76

(54) **Vorrichtung zur Innenisolation einer Bauteilwand**

(71) Anmelder: insu-fast GmbH, 06188 Landsberg OT Queis (DE)
(72) Erfinder: Barth, Heinz, 93107 Thalmassing (DE)
(74) Vertreter: Keydel, Lutz

(57) **Zusammenfassung**

Vorliegende Erfindung betrifft eine Vorrichtung zur Innenisolation einer Bauteilwand (1), umfassend wenigstens ein wenigstens doppelschaliges Isolationsmittel (2), mit wenigstens einem Isolationselement (4), das auf die Innenseite der Bauteilwand (1) aufbringbar ist, und wenigstens einem Vorsatzelement (6), das mittels wenigstens eines Abstandhalters (8) unter Bildung eines Hinterlüftungsraumes (10) derart an der zur Bauteilwand (1) abgewandten Seite des Isolationselementes (4) angeordnet oder anordbar ist, dass Luft unter Bildung eines Hinterlüftungsstromes (12) insbesondere bodenseitig in den Hinterlüftungsraum (10) eindringen und diesen insbesondere deckenseitig wieder verlassen kann.

## Beschreibung

Die Erfindung betrifft eine Vorrichtung zur Innenisolation einer Bauteilwand.

Aufgrund der inzwischen sehr hohen Anforderung an den Energiehaushalt von Gebäuden und insbesondere von Wohngebäuden besteht immer häufiger der Bedarf nach effektiven Verfahren zur thermischen Isolation. Insbesondere bei bestehenden Gebäuden gibt es im Zuge einer Sanierung im Prinzip nur zwei Möglichkeiten, nämlich die Außenisolation, von der Außenseite des Gebäudes aus, und die Innenisolation, von der Innenseite des Gebäudes aus.

Insbesondere die Fassaden von denkmalgeschützten Gebäuden dürfen jedoch nur unter Einhaltung der Vorschriften des Denkmalschutzes verändert werden. Da eine flächige Anbringung einer Außendämmung für diese in der Regel sehr schlecht gedämmten Gebäude nicht in Frage kommt, bleibt nur die Dämmung der Außenwände auf der in das Gebäudeinnere gerichteten Innenseite. Das gleiche gilt, wenn die nachträgliche Außendämmung wegen nur mit großem Aufwand montierbarer Fassadenelemente nicht in Frage kommt.

Eine Innendämmung ist im Gegensatz zur Außendämmung bauphysikalisch nach dem bisherigen Stand der Technik und Erkenntnisstand grundsätzlich kritisch zu betrachten, da es aufgrund der Temperatur- und Feuchtespreizung im Winter bei Abfall der Temperatur unter den Taupunkt zur Kondensation der in den Wandaufbau eingedrungenen Feuchtigkeit kommen kann. Tauwasser ist eine der häufigsten Ursachen für Bauschäden, wobei zunehmend auch deren gesundheitsgefährdendes Potential erkannt wird.

Nach dem Stand der Technik wird bislang bei der Innendämmung eine Dampfsperre angebracht. Dabei handelt es sich um eine fluiddichte Schicht, beispielsweise um eine Folie aus Polyethylen, die das Eindringen des Tauwassers in angrenzende Wandschichten verhindert. Allerdings ist eine vollkommen feuchtigkeitsdichte Ausführung einer Dampfbremse besonders bei Altbausanierungen aufwendig und fehleranfällig. So ist in manchen Randbereichen, bei Durchdringungen, bei Bauteilanschlüssen etc. eine Dampfsperre ohnehin kaum ordnungsgemäß zu bewerkstelligen.

Die Aufgabe der vorliegenden Erfindung besteht folglich darin, eine Vorrichtung zur Innenisolation einer Bauteilwand anzubieten, die die einfache und sichere Innendämmung bzw. Innenisolation einer Bauteilwand erlaubt.

Diese Aufgabe wird durch eine Vorrichtung gemäß Patentanspruch 1 gelöst.

Insbesondere wird diese Aufgabe durch eine Vorrichtung zur Innenisolation einer Bauteilwand gelöst, umfassend wenigstens ein wenigstens doppelschaliges Isolationsmittel, mit wenigstens einem Isolationselement, das auf die Innenseite der Bauteilwand aufbringbar ist, und wenigstens einem Vorsatzelement, das mittels wenigstens eines Abstandhalters unter Bildung eines Hinterlüftungsraumes derart an der zur Bauteilwand abgewandten Seite des Isolationselementes angeordnet oder anordbar ist, dass Luft unter Bildung eines Hinterlüftungsstromes insbesondere bodenseitig in den Hinterlüftungsraum eindringen und diesen insbesondere deckenseitig wieder verlassen kann.

Unter der Bezeichnung "Innenisolation der Bauteilwand" wird im Umfang der Erfindung jede Isolation einer Bauteilwand von der Seite aus verstanden, die einem wärmeren Raumbereich zugewandt ist. Stellt also eine Bauteilwand ein Trennmittel zwischen einem warmen und einem kälteren Bereich dar, wird bei der "Innenisolation" die Seite der Bauteilwand gedämmt, die dem wärmeren Bereich zuweist. Insofern wird also unter Innenisolation nicht nur die Isolation einer Bauteilaußenwand sondern grundsätzlich die Isolation einer zwei unterschiedlich warme Raumbereiche trennenden Bauteilwand verstanden.

Ein wesentlicher Punkt der erfindungsgemäßen Vorrichtung zur Innenisolation ist die Verwendung eines wenigstens doppelschaligen Isolationsmittels, das insbesondere durch das auf der Bauteilwand aufgebrachte Isolationselement eine thermische Isolation der Bauteilwand von der Innenseite aus garantiert und über das erfindungsgemäße vom Isolationselement beabstandet angeordnete Vorsatzelement einen Hinterlüftungsraum schafft, über den Luft und insbesondere Luft mit einer hohen Luftfeuchtigkeit abtransportiert wird.

Durch die Ausbildung des Hinterlüftungsraumes zwischen dem Isolationselement und dem Vorsatzelement bildet sich insbesondere durch den resultierenden Kamineffekt ein Hinterlüftungsstrom, der insbesondere feuchtigkeitsreiche Luft vom Isolationselement so abtransportiert, dass es nicht zu einem Tauwasserniederschlag im Isolationselement bzw. in der Bauteilwand kommt. Die Größe des Hinterlüftungsraumes ist dabei in Abhängigkeit der Raumgröße, der Bauteilwandgröße, der Raumhöhe, der Umgebungstemperatur etc. zu wählen.

Grundsätzlich ist es dabei möglich, das wenigstens doppelschalige Isolationsmittel so auszubilden, dass es als vorkonfektioniertes doppelschaliges Isolationsmittel auf die Bauteilwand aufgebracht oder aber in einzelnen Montageschritten an der Bauteilwand zu einem doppelschaligen Isolationsmittels komplettiert wird. Wie im Folgenden noch detailliert beschrieben, ist es in diesem Zusammenhang auch möglich eine Mehrzahl einzelner solcher Isolationsmittel an der Bauteilwand zu einem Isolationsaufbau zur Isolation der Bauteilwand zu kombinieren. Das bedeutet also, dass mehrere einzelne wenigstens doppelschalige Isolationsmittel an der Bauteilwand befestigt und zu einem kompletten Isolationsaufbau miteinander verbunden werden. Hier sind sämtliche aus dem Stand der Technik bekannten Verfahren zum Verbinden einzelner Isolationselemente und Vorsatzelemente insbesondere zu deren Fügung anwendbar.

Natürlich kann das wenigstens doppelschalige Isolationsmittel auch aus mehr als den zwei hier dargestellten Elementschichten bestehen. So können also beispielsweise mehrere Schichten an Isolationselementen übereinander gelagert werden, solange sie durch wenigstens einen Hinterlüftungsraum und den darin ausgebildeten Konvektions- bzw. Hinterlüftungsstrom belüftet werden.

Als Isolationselemente können sämtliche aus dem Stand der Technik bekannten Elemente zur thermischen Isolation einer Bauteilwand verwendet werden. Als Vorsatzelement gilt entsprechendes, wobei hier vorzugsweise die aus dem Trockenbau bekannten Wandelemente ihre Anwendung finden. Ein Vorsatzelement kann also beispielsweise aus einer Gipskartonplatte, aus einer Multiplex-oder dergleichen Holzfaserplatte hergestellt werden.

Die Kombination aus Vorsatzelement, Abstandshalter und Isolationselement bildet folglich das wenigstens doppelschalige Isolationsmittel, das zur Innenisolation der Bauteilwand auf deren Innenseite aufgeklebt, angeschraubt oder dergleichen montiert wird. Neben dem Befestigen auf der Bauteilwand ist es natürlich auch möglich, das doppelschalige Isolationselement als Vorsatzschale innenseitig vor der Bauteilwand anzuordnen. Besonderen Effekt hat dabei der einen Kaminzug simulierende Hinterlüftungsraum, der zu einer "aktiven" Hinterlüftung des Vorsatzelementes und so zu einem Abtransport der feuchtigkeitsreichen Luft im Hinterlüftungsraum führt. Dies verhindert effektiv Tauwasserniederschlag im Isolationselement bzw. in der Bauteilwand.

Vorzugsweise weist wenigstens ein Vorsatzelement wenigstens einen Öffnungsbereich auf, über den die Luft in den Hinterlüftungsraum eindringen und/oder diesen verlassen kann. Der Öffnungsbereich am Vorsatzelement steht also in Fluidverbindung mit dem Hinterlüftungsraum. Der Öffnungsbereich wird beispielsweise gebildet durch einen wenigstens teilweise durch das Vorsatzelement umschlossen Bereich, also beispielsweise einen Öffnungsschlitz im Vorsatzelement, der mit dem Hinterlüftungsraum in Fluidverbindung steht, oder aber durch ein Vorsatzelement, das, wie im Folgenden noch näher beschrieben, im Vergleich zum Isolationselement etwas kleiner ausgebildet ist und so in Bezug auf das Isolationselement einen Öffnungsbereich, beispielsweise mit einem angrenzenden Unstetigkeitsbereich, also einer angrenzenden Wand, einer Decke, einem Boden oder einem ähnlichen Anschlusselement, bildet.

Vorzugsweise ist also an einem Unstetigkeitsbereich, insbesondere einem Eckbereich zwischen einem Isolationselement und einer Wand, einer Decke, einem Boden oder dergleichen Anschlussbauteil, das Isolationselement an die Wand, die Decke oder den Boden oder das dergleichen Anschlussbauteil angeschlossen oder anschließbar und das Vorsatzelement unter Bildung des Öffnungsbereiches mit seinem Randbereich von dem Unstetigkeitsbereich, der Wand, der Decke, dem Boden oder dem dergleichen Anschlussbauteil beabstandet. Durch diese Ausführungsform bildet sich zwischen dem Unstetigkeitsbereich und dem Randbereich des Vorsatzelementes ein Öffnungsbereich, der in Fluidverbindung mit dem Hinterlüftungsraum steht und das Eindringen bzw. Austreten von Luft in den Hinterlüftungsraum erlaubt.

Wird also beispielsweise an einer Bauteilaußenwand, die von zwei Wänden, einem Boden und einer Decke umschlossenen wird, vollflächig ein Isolationselement aufgebracht, auf das dann das Vorsatzelement, durch die Abstandshalter beabstandet, aufgebracht wird, ist es möglich, das Vorsatzelement etwas kleiner als das Isolationselement auszubilden, so dass an einigen oder aber an allen Anschlussbereichen zwischen der Bauteilwand und den zwei Wänden, der Decke und dem Boden eine Fuge bzw. ein Öffnungsbereich entsteht, um das Ein- bzw. Austreten der Luft in den Hinterlüftungsbereich zu ermöglichen. Wird das Vorsatzelement allseitig umlaufend von den Wänden, der Decke und dem Boden beabstandet ausgebildet, ergibt sich eine als umlaufender Öffnungsbereich ausgebildete umlaufende Fuge, die insbesondere im Bodenbereich das Eintreten der Luft und im Deckenbereich deren Austreten erlaubt. Auch durch die seitlich verlaufenden Öffnungsbereiche im Bereich der Anschlussstellen der Wände an die Bauteilwand ergeben sich Fugen, die das seitliche Aus- und Eintreten der Luft ermöglichen und so zu einer aktiven Belüftung dieser Eckbereiche beitragen.

Gerade die Belüftung der Unstetigkeitsbereiche und insbesondere der Eckbereiche oder dergleichen Anschlussbereiche zwischen Wänden, Decken, Böden oder dergleichen Anschlussbauteilen an die Bauteilwand trägt entscheidend zur Verhinderung des Tauwasserniederschlages im Isolationselement bzw. in der Bauteilwand bei.

Vorzugsweise ist in einem unteren, insbesondere bodenseitigen Bereich der Vorrichtung ein Heizelement derart ausgebildet und angeordnet, dass es zur Bildung eines aufsteigenden Konvektionshinterlüftungsstromes die Lufttemperatur im unteren, insbesondere bodenseitigen Hinterlüftungsraum anhebt. Das hier verwendete Heizelement dient also nicht dazu, die Innenraumtemperatur des Bauwerkes selbst zu heben, sondern lediglich dazu einen Konfektionsstrom im Hinterlüftungsraum anzuregen bzw. aufrechtzuhalten, so dass Luft von einer Seite zur anderen Seite und insbesondere von der Unterseite zu der Oberseite strömt. Das Heizelement kann also beispielsweise ein einzelner Heizdraht sein, der im unteren Bereich der Vorrichtung ausgebildet ist. Insofern besteht hier ein deutlicher Unterschied zu Wandelementen, die mittels einer meist flächig aufgebrachten Wandheizung die Raumtemperatur regeln sollen. Insofern kann das Heizelement deutlich kleiner dimensioniert und preiswerter ausgebildet werden.

Hierzu kann im unteren Bereich an der Vorrichtung und insbesondere am Vorsatzelement bzw. an der Stirnseite des Vorsatzelementes ein geeigneter Kanal oder dergleichen Aufnahmemittel ausgebildet sein, das die Anordnung des Heizelementes derart erlaubt, dass dessen Heizwirkung primär und insbesondere im Wesentlichen ausschließlich auf den Hinterlüftungsraum einwirkt. Ein solches Mittel zur Anordnung des Heizelementes kann beispielsweise eine Nut im Vorsatzelement und insbesondere auf der dem Hinterlüftungsraum zugewandten Seite des Vorsatzelementes sein. Auch kann ein solcher Kanal als Kabelkanal etc. ausgebildet und insbesondere an der Stirnseite des Vorsatzelementes ausgebildet sein. Neben einem Heizelement sind sämtliche vorzugsweise streifenförmig verlaufenden Heizelemente anwendbar, die der vorzugsweise punktuellen oder streifenförmigen Heizung und insofern der Anhebung der Temperatur im unteren Bereich des Hinterlüftungsraumes dienen.

Vorzugsweise ist das Heizelement dabei derart ausgebildet und angeordnet, dass es die Lufttemperatur im unteren, insbesondere bodenseitigen Hinterlüftungsraum zwischen 0,1° und 5°, insbesondere zwischen 0,1° und 1° anhebt. Eine solche Temperatur hat sich als ausreichend erwiesen, den im Hinterlüftungsraum gewünschten Hinterlüftungsstrom anzuregen und aufrechtzuerhalten.

Vorzugsweise ist auf der dem Hinterlüftungsraum zugewandten Seite des Isolationselementes und/oder des Vorsatzelementes eine die Luftreibung des Hinterlüftungsstromes reduzierende Oberfläche ausgebildet. Eine solche Ausbildung kann beispielsweise durch eine reibungsreduzierende Oberflächenbeschichtung des Vorsatzelementes bzw. des Isolationselementes auf der dem Hinterlüftungsraum zugewandten Seite erreicht werden. Hier können beispielsweise Polyurethanbeschichtungen ihre Anwendung finden.

Vorzugsweise ist im Hinterlüftungsraum wenigstens ein Strömungselement zur Strömungsführung des Hinterlüftungsstromes angeordnet. Hierunter wird die Anordnung eines strömungsführenden Strömungsleitelementes derart verstanden, dass Luft, die in den Hinterlüftungsraum eintritt, diesen durchströmt und wieder verlässt, auf einer optimalen vorzugsweise wirbelfreien laminaren Strömungsbahn geleitet wird. Insbesondere ist dabei das Strömungsleitelement derart angeordnet und ausgebildet, dass der Hinterlüftungsstrom im Wesentlichen keinen Strömungsabriss erfährt. Durch die vorgenannten Ausführungsformen erhält man eine Hinterlüftung, die effektiv und insbesondere ohne die Bildung von Feuchtefallen Luft aus dem Hinterlüftungsraum abführt, so dass die Bildung von Tauwasserniederschlag und insbesondere Tauwassernestern in Unstetigkeitsbereichen und insbesondere in Eckbereichen vermieden wird.

Das Strömungsleitelement kann auf unterschiedliche Art und Weise ausgebildet und angeordnet werden.

Vorzugsweise ist wenigstens ein Strömungsleitelement wenigstens in einem Unstetigkeitsbereich, insbesondere einem Eckbereich zwischen dem Isolationselement und einer Wand, einer Ecke, einem Boden oder dergleichen Anschlussbauteil angeordnet. Das Strömungsleitelement dient hier der Strömungsführung in diesem Unstetigkeitsbereich, so dass es dort nicht zu Strömungsabrissen, Luftfallen, zu Wirbelbildung etc. und somit zum Niederschlag von Tauwasser kommt.

Vorzugsweise weist wenigstens ein Strömungsleitelement einen strömungsführenden Auskleidungsbereich auf, der den Unstetigkeitsbereich wenigstens teilsweise auskleidet. Dieser Auskleidungsbereich ist dabei vorzugsweise so ausgebildet, dass er eine stetige und insbesondere wirbelfreie Strömungsleitung ohne die Bildung von Strömungsabrissen etc. garantiert.

Vorzugsweise ist wenigstens ein Strömungsleitelement aus einem Schaumstoff oder dergleichen Kunststoffmaterial ausgebildet. Eine solche Ausführungsform erlaubt die kostengünstige Herstellung und darüber hinaus den passgenauen Einbau und ggfs. eine Adaption des Strömungsleitelementes vor Ort.

Insbesondere in einem Eckbereich kann also beispielsweise das Strömungsleitelement als Strömungskeil mit einem bogenförmigen Auskleidungsbereich ausgebildet werden, so dass Luft, die am Bodenbereich entlang strömt und über den Öffnungsbereich in den Hinterlüftungsbereich eintritt, über diesen bogenförmigen Strömungskeil, der den Eckbereich zwischen Isolationselement und Boden auskleidet, strömungsabrissfrei um 90° umgelenkt und in den Hinterlüftungsraum eingeführt wird. Natürlich können je nach baulichen Gegebenheiten die Strömungsleitelemente entsprechend adaptiert werden, um eine optimale Strömungsführung und insbesondere eine strömungsabrissfreie bzw. wirbelfreie Strömungsführung zu gewährleisten.

Neben der Auskleidung von Unstetigkeitsbereichen bzw. der entsprechenden Anordnung von Strömungsleitelementen zur Strömungsumlenkung ist es zudem möglich, Strömungsleitelemente so auszubilden, dass sie der Wirbelbildung an Unstetigkeitsbereichen entgegenwirken.

Das Strömungsleitelement ist vorzugsweise über Verbindungsmittel insbesondere lösbar am Isolationselement und/oder am Vorsatzelement und/oder an einem Bauteil des Bauwerkes angeordnet bzw. anordbar. Hier können u.a. Verbindungselemente wie Klebeschichten, Klebebänder, Klettverschlüsse etc. ihre Anwendung finden. Vorzugsweise sind die Strömungsleitelemente bereits vorkonfektioniert mit solchen Verbindungselementen versehen, über die sie dann an dem Isolationselement und/oder dem Vorsatzelement und/oder an einem Bauteil des Bauwerkes anordbar sind.

Vorzugsweise ist wenigstens ein Strömungsleitelement an wenigstens einem Randbereich und insbesondere Stirnseitenbereich des Vorsatzelementes ausgebildet oder angeordnet. Dies ist insbesondere dann sinnvoll, wenn der Randbereich als Teil des Öffnungsbereiches ausgebildet ist bzw. fungiert. Wenn also der Randbereich eines Vorsatzelementes von einer angrenzenden Wand, Decke oder einem Boden beabstandet ist und so einen Öffnungsbereich begrenzt, über den Luft in den Hinterlüftungsbereich ein- oder austreten kann, ist es von Vorteil, an diesem Randbereich ein Strömungselement so anzuordnen, dass es die Luft auf ihrem Strömungspfad lenkt und insbesondere die Wirbelbildung am Randbereich verhindert. Hier kann beispielsweise das Strömungsleitelement als abgerundete Ecke des Randbereiches des Vorsatzelementes ausgebildet werden. Hier sind sämtliche aus dem Stand der Technik bekannten Geometrien zur Strömungsführung anwendbar.

Vorzugsweise weist wenigstens ein Abstandshalter wenigstens ein Strömungsleitelement auf oder ist als Strömungsleitelement ausgebildet. Grundsätzlich kann der Abstandshalter als flächiges, streifenförmiges oder punktuelles Abstandshalterelement ausgebildet werden, so dass er das Vorsatzelement vom Isolationselement beabstandet. Der Abstandshalter kann also beispielsweise als Abstandshalterbahn ausgebildet werden, so dass er als Seitenwand für den Hinterlüftungsraum fungiert. Auch ist es möglich, den Abstandshalter als punktuellen Abstandshalter auszuführen, so dass er punktförmig das Vorsatzelement gegen das Isolationselement abstützt. Durch die Anordnung von Strömungsleitelementen am Abstandshalter und insbesondere bei solchen punktuell wirkenden Abstandshaltern wird innerhalb des Hinterlüftungsraumes die Strömungsführung des Hinterlüftungsstromes so beeinflusst, dass es nicht zu Strömungsabrissen und vor allem zu einer optimalen Strömungsführung durch den Hinterlüftungsraum kommt. So können beispielsweise die Abstandshalter in einer strömungstechnisch optimierten Form ausgebildet werden, insbesondere um die Wirbelbildung im stromaufwärts gelegenen Rückbereich eines jeden Abstandshalters zu verhindern. Hier bieten sich beispielsweise beidseitig spitz zulaufende Tropfenformen für die Abstandshalter an.

Vorzugsweise ist wenigstens ein Strömungsleitelement zur Veränderung der Strömungsführung im Hinterlüftungsraum insbesondere in seiner Position veränderbar ausgebildet und/oder angeordnet. Auf diese Weise kann also beispielsweise in besonders empfindlichen Eckbereichen einer Bauteilwand durch eine genaue Ausrichtung der Strömungsleitelemente oder durch deren strömungstechnische Adaption eine besonders effektive Belüftung erzielt werden. Auch in diesem Zusammenhang kann entweder das Strömungsleitelement selbst veränderbar ausgebildet sein oder aber durch eine veränderbare Positionierung strömungstechnisch optimal ausgerichtet werden bzw. ausrichtbar sein.

Vorzugsweise wird in diesem Zusammenhang der Abstandshalter über ein "zentrisches" Montageelement zwischen dem Isolationselement und dem Vorsatzelement so fixiert, dass er um das Montageelement als Drehachse verdrehbar ist. Die dazu nötige Drehkraft ist höher als die Kraft, die während der Hinterlüftung auf den Abstandshalter wirkt, so dass der verdrehte Abstandshalter im Betrieb in seiner Position bleibt und nur aktiv zur Manipulation der Strömungsführung und insbesondere während der Montage bewegt werden kann.

Grundsätzlich ist es bevorzugt, den Abstandshalter so auszubilden, dass er dem Hinterlüftungsstrom einen möglichst geringen Strömungswiderstand bietet.

Vorzugsweise ist wenigstens ein Strömungsleitelement derart ausgebildet und/oder angeordnet, dass es wenigstens einen Teil des Hinterlüftungsstromes zu einem Unstetigkeitsbereich und insbesondere einem Eckbereich zwischen dem Isolationselement und einer Wand, einer Decke, einem Boden oder dergleichen Anschlussbauteil und/oder zu einem Öffnungsbereich, über den die Luft den Hinterlüftungsraum verlassen kann, leitet. Das Strömungsleitelement kann also beispielsweise so ausgebildet werden, dass es in den Randbereichen zwischen Bauteilwand und einer angrenzenden weiteren Bauteilwand etc. eine besonders effektive Hinterlüftung bewirkt, indem der Hinterlüftungsstrom in diese Eckbereiche eingeleitet bzw. später aus diesen abgeleitet wird. Selbiges gilt für Anschlussstellen von Balken oder dergleichen Hinterschneidungen, die durch entsprechend ausgebildete oder positionierte Strömungsleitelemente besonders hinterlüftet werden.

Wie bereits zuvor erwähnt ist vorzugsweise eine Mehrzahl an einzelnen wenigstens zweischaligen Isolationsmitteln zu einem Isolationsaufbau zur Isolation der Bauteilwand kombinierbar. Die einzelnen Isolationsmittel können beispielsweise als vorkonfektionierte Bauteile angeliefert und dann vor Ort zu einem kompletten Isolationsaufbau an der Bauteilwand angeordnet werden. Dabei ist es bevorzugt, wenn die Isolationselemente und/oder die Vorsatzelemente mit entsprechenden Fügeelementen, beispielsweise Nut- und Federelementen etc., ausgerüstet sind. So kann beispielsweise ein einzelnes Isolationsmittel ein mit Nut- und Federsystem ausgerüstetes Isolationselement und ein mit glatten Fügekanten versehenes Vorsatzelement aufweisen, das bei der Kombination mit einem weiteren entsprechend ausgebildeten Isolationsmittel zu einem Isolationsaufbau komplettiert wird. Die Nut- und Federsysteme der Isolationselemente greifen dabei unter Vermeidung von Wärmebrücken ineinander ein, während die komplementär zueinander ausgebildeten Vorsatzelemente über entsprechende aufspachtelbare oder dergleichen montierbare Fugenbänder verschließbar sind. Auch ist es möglich, bei solchen Systemen die einzelnen Kontaktbereiche zwischen den Vorsatzelemente bewusst als offene Fugen auszubilden, um diese als Öffnungsbereiche zum Einbringen bzw. Austreten der Luft zu nutzen.

Auch ist es möglich, die Vorsatzelemente mit entsprechenden Sollbruchstellen zu versehen, um bei Bedarf die Öffnungsbereiche herzustellen bzw. Öffnungsbereiche mit integrierten oder dort vorgesehenen Strömungsleitelementen zu bilden. So können beispielsweise die Randbereiche der Vorsatzelemente mit entsprechenden Sollbruchstellen so versehen werden, so dass bei Bedarf diese Randbereiche zur Bildung von Öffnungsbereich und/oder zur Bildung von Strömungsleitelementen abgetrennt werden können.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1: eine isometrische Ansicht eines Wandaufbaus, umfassend eine Ausführungsform der Vorrichtung zur Innenisolation einer Bauteilwand;
- Fig. 2: einen Vertikalschnitt durch den Wandaufbau gemäß der Schnittführung aus Fig. 1;
- Fig. 3 und 4: zwei Ansichten einer Ausführungsform eines Abstandshalters der Vorrichtung zur Innenisolation gemäß Fig. 1;
- Fig. 5: einen Horizontalschnitt durch den Wandaufbau aus Fig. 1 gemäß der Schnittführung aus Fig. 2;
- Fig. 6: einen Längsschnitt durch den Wandaufbau aus Fig. 1 gemäß der Schnittführung aus Fig. 5; und
- Fig. 7: eine isometrische Ansicht eines Wandaufbaus, umfassend eine weitere Ausführungsform der Vorrichtung zur Innenisolation einer Bauteilwand.

Im Folgenden werden für gleiche und gleichwirkende Bauteile dieselben Bezugsziffern verwendet, wobei zur Unterscheidung bisweilen Hochindizes ihre Anwendung finden.

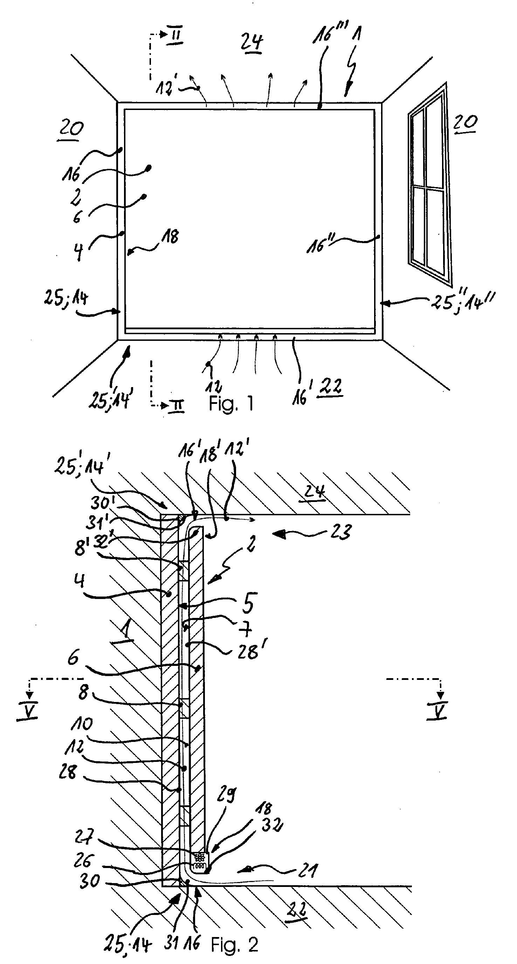

Fig. 1 zeigt eine isometrische Ansicht eines Wandaufbaus, umfassend eine Ausführungsform der Vorrichtung zur Innenisolation einer Bauteilwand. Dargestellt ist eine Bauteilwand 1, auf die vollflächig eine Ausführungsform des doppelschaligen Isolationsmittels 2 aufgebracht ist. An die Bauteilwand 1 schließen allseitig weitere Bauteile, nämlich zwei Wände 20, ein Boden 22 und eine Decke 24 an, so dass sich in den Eckbereichen 25 Unstetigkeitsbereiche 14 bilden, in denen es bei Vorrichtungen zur Innenisolation gemäß dem Stand der Technik sehr häufig zu Tauwasserausfall kommt.

Die Bauteilwand 1 ist hier als eine Bauteilaußenwand dargestellt, also als eine solche Wand, die einen insbesondere in Fig. 1 dargestellten warmen Raum von einem kalten Raum trennt.

Wie in Fig. 1, 2 und 5 dargestellt, umfasst das wenigstens doppelschalige Isolationsmittel 2 ein Isolationselement 4, auf das beabstandet ein Vorsatzelement 6 aufgebracht ist. Das Isolationselement 4 ist dabei so ausgebildet und angeordnet, dass es an die angrenzenden Wände 10, den Boden 22 und die Decke 24 anschließt, die Bauteilwand 1 also vollflächig isoliert. Auf der der Bauteilwand 1 abgewandten Seite 5 des Isolationselementes 4 ist über eine Mehrzahl an Abstandshaltern 8 beabstandet das Vorsatzelement 6 angeordnet. Aufgrund der Abstandshalter 8 ergibt sich zwischen dem lsolationselement 4 und dem Vorsatzelement 6 ein Hinterlüftungsraum 10, der aufgrund eines ihn durchlaufenden Hinterlüftungsstroms 12 einen Abtransport der zwischen dem lsolationselement 4 und dem Vorsatzelement 6 befindlichen Luft erlaubt. Auf diese Weise wird verhindert, dass es zu einem Tauwasserausfall im Isolationselement 4 bzw. der Bauteilwand 1 und daraus resultierenden Feuchteschäden kommt.

Das Isolationselement 4 besteht aus einem thermisch dämmenden Material, wobei hier sämtliche aus dem Stand der Technik bekannten Materialien ihre Anwendung finden können. Das Vorsatzelement 6 besteht hier aus einer Holzfaserplatte, die als Verkleidungselement einen im Wesentlichen vollständig nutzbaren Wandaufbau bietet. An den dem Hinterlüftungsraum 10 zuweisenden Seiten 5 und 7 des Isolationselementes 4 bzw. des Vorsatzelementes 6 ist eine Oberflächenbeschichtung 28 aufgebracht, die eine die Luftreibung des Hinterlüftungsstromes 12 reduzierende Eigenschaft aufweist.

Eine wesentliche Eigenschaft des doppelschaligen Isolationsmittels 2 ist dessen "Kaminzuwirkung", die einen aktiven Hinterlüftungsstrom 12, bei dieser Ausführungsform vom bodenseitigen Bereich 21 zum deckenseitigen Bereich 23, bewirkt. Dieser Hinterlüftungsstrom transportiert feuchte Luft so ab, dass Tauchwasserabfall vermieden bzw. reduziert wird.

Um bei Bedarf und insbesondere bei strömungstechnisch ungünstigen Bedingungen diesen Hinterlüftungsstrom 12 aufzubauen bzw. aufrechtzuerhalten, sind im bodenseitigen Bereich 21 des Vorsatzelementes 6 sowohl ein Heizelement 26 als auch ein Ventilationselement 27 angeordnet. Bei Bedarf kann über das Heizelement 26 die Lufttemperatur im bodenseitigen Bereich 21 des Hinterlüftungsraumes 10 um einige wenige Grade, vorzugsweise zwischen 0,1° und 5° und insbesondere 0,1° und 1° angehoben werden, so dass sich auch bei ungünstigen Umgebungsbedingungen ein Hinterlüftungsstrom 12 zum Abtransport der Luft im Hinterlüftungsraum 10 aufbaut. Eine aktive Belüftung ist bei Bedarf bei dieser Ausführungsform stattdessen bzw. unterstützend über das Ventilationselement 27 möglich. Je nach Ausführungsform kann also ein Heizelement 26 oder ein Ventilationselement 27 oder aber beide Elemente zusammen verbaut und betrieben werden.

Erfindungsgemäß sind hier das Heizelement 26 und das Ventilationselement 27 in einem hierzu ausgebildeten Kanal 29 angeordnet, der beispielsweise als Aufnahmenut auf der dem Hinterlüftungsraum 10 zugewandten Seite 7 ausgebildet sein kann.

Damit Luft in den Hinterlüftungsraum 10 eindringen und diesen in Form eines Hinterlüftungsstromes 12 durchströmen kann, verfügt das doppelschalige Isolationsmittel 2 über Öffnungsbereiche 16, die hier als die Bauteilwand 1 im Wesentlichen umlaufende Fugen ausgebildet sind. Das Vorsatzelement ist dazu mit seinem Randbereich 18 beabstandet von den angrenzenden Unstetigkeitsbereichen und insbesondere den Wänden 20, dem Boden 22 und der Decke 24 ausgebildet. Durch den dadurch resultierenden Öffnungsbereich 16 kann nun Luft in den Hinterlüftungsraum 10 eintreten bzw. diesen verlassen.

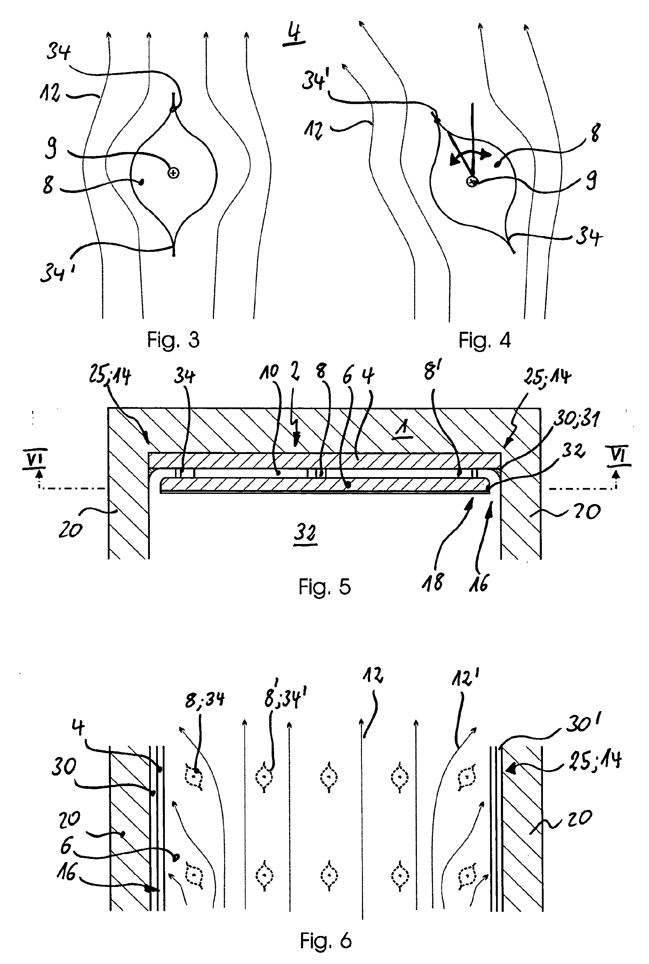

Wie insbesondere in Fig. 1 dargestellt, erstreckt sich der Öffnungsbereich 16 nicht nur im bodenseitigen Bereich 21 und dem deckenseitigen Bereich 23 sondern auch vertikal entlang der Wände 20. Auf diese Weise kann Luft, die bodenseitig 24 in den Hinterlüftungsraum 10 eintritt, seitlich aus dem Hinterlüftungsraum austreten und so insbesondere in den Unstetigkeitsbereichen 14, also den Eckbereichen 25 zwischen Bauteilwand 1 und Wänden 20 die dort meist befindliche Feuchtigkeit abtransportieren. Auf diese Besonderheit wird u.a. auch im Folgenden noch mit Bezug auf Fig. 6 eingegangen.

Um die Strömungsführung zu verbessern, verfügt das doppelschalige Isolationsmittel 2 über eine Mehrzahl an Strömungsleitelementen 30, 32 und 34, deren Funktion im Folgenden im Detail beschrieben wird.

So zeigt die Fig. 2 in den Unstetigkeitsbereichen 14 zwischen dem Boden 22 und der Bauteilwand 1 bzw. der Decke 24 und der Bauteilwand 1 zwei Strömungsleitelemente 30, die, die Eckbereiche 25 mittels eines Auskleidungsbereiches 31 auskleidend, eine strömungsführende Funktion erfüllen. Der Hinterlüftungsstrom 12, der im bodenseitigen Bereich 21 über den Öffnungsbereich 16 den Hinterlüftungsraum 10 betritt, wird durch das bodenseitig angeordnete Strömungsleitelement 30 um 90° umgelenkt, ohne dass es zu einem nennenswerten Strömungsabriss kommt. Gerade bei dem hier vorliegenden sehr sensiblen Hinterlüftungsstrom 12 verbessert dies die Hinterlüftungswirkung erheblich.

Ein ähnliches Strömungsleitelement 30 ist im deckenseitigen Bereich 23 ausgebildet, wobei auch hier der Unstetigkeitsbereich 14 bzw. der Eckbereich 25 zwischen der Decke 24 und der Bauteilwand 1 mittels des Auskleidungsbereiches 31 so ausgekleidet wird, dass der Hinterlüftungsstrom 12 um im Wesentlichen 90° umgelenkt wird, so dass er ohne Strömungsabriss den Hinterlüftungsraum 10 über den deckenseitig 23 ausgebildeten Öffnungsbereich 16 verlassen kann. Erfindungsgemäß sind dabei die beiden Strömungsleitelemente 30 streifenförmig u.a. entlang des gesamten bodenseitigen Bereichs 21 und des gesamten deckenseitigen Bereichs 23 ausgebildet. Die Befestigung erfolgt hier über Klebemittel, die an den Strömungsleitelementen 30 angeordnet sind und ein Festlegen am Isolationselement 4 erlauben.

Zusätzlich zu den in den Eckbereichen 25 angeordneten Strömungsleitelementen 30 erkennt man in Fig. 2 darüber hinaus Strömungsleitelemente 32, die an den Randbereichen 18 des Vorsatzelementes 6 ausgebildet sind. Sind bei dieser Ausführungsform des doppelschaligen Isolationsmittels 2 die zuvor beschriebenen Strömungsleitelemente 30 in den Eckbereichen 25 als eigenständige Schaumstoffteile ausgebildet, sind, zumindest im deckenseitigen Bereich 23, die an den Randbereichen 18 ausgebildeten Strömungsleitelemente 32 einstückig mit dem Vorsatzelement 6 ausgeführt. Sie bilden vielmehr einen abgerundeten Randbereich 18, der insbesondere im Zusammenspiel mit den Strömungsleitelementen 30 eine strömungsabrissfreie Umlenkung des Hinterlüftungsstromes 12 garantiert. Anstelle der hier dargestellten integralen Ausbildung der Strömungsleitelemente 32 ist es natürlich auch möglich, Strömungsleitelemente 32 als eigenständige Bauteile an den Randbereichen 18 und insbesondere an den Stirnseitenbereichen der Vorsatzelemente 6 zu positionieren.

In den Fig. 3 und 4 sind die zuvor erwähnten Abstandshalter 8 im Detail dargestellt. Erkennbar ist, dass die Abstandshalter 8 über je ein Befestigungsmittel 9 am Isolationselement 4 bzw. an der dahinter liegenden Bauteilwand 1 befestigt werden können. So ist es beispielsweise möglich, die Abstandshalter 8 an den Isolationselementen 4 zu befestigen und an den Abstandshaltern selber dann die Vorsatzelemente 6 anzuschlagen. Auch ist es möglich, über geeignete Befestigungsmittel 9 die Vorsatzelemente 6 und die Isolationselemente 4 miteinander unter Pressung der Abstandshalter 8 zu fixieren und/oder gemeinsam an der Bauteilwand zu befestigen.

Bei der hier dargestellten Ausführungsform sind die Abstandshalter 8 über die Befestigungsmittel 9 so am Isolationselement 4 befestigt, dass die Abstandshalter 8 in ihrer Position veränderbar sind (siehe Fig. 4). Auf diese Weise ist es möglich, den den Hinterlüftungsraum 10 durchströmenden Hinterlüftungsstrom 12 bei Bedarf umzulenken.

Die Abstandshalter 8 selber verfügen ebenfalls über Strömungsleitelemente 34, die zum einen den Hinterlüftungsstrom 12 begünstigen und insbesondere Verwirbelungen im in Strömungsrichtung abgewandten Bereich der Abstandshalter 8 verhindern sollen zum anderen aber insbesondere in den Eckbereichen 25 oder dergleichen Unstetigkeitsbereichen 14 (siehe Fig. 5 und 6) eine aktive Strömungsumlenkung zu diesen Bereichen bewirken sollen.

Wie in den Fig. 5 und 6 dargestellt, wird die Möglichkeit zur Strömungsumlenkung in den Eckbereichen 25 ausgenutzt, da sich, wie bereits erwähnt, in diesem Bereich sehr häufig Tauwasser niederschlägt. Durch ein entsprechendes Umpositionieren bzw. hier Verdrehen der Strömungsleitelemente 34 bzw. der Abstandshalter 8 ist es möglich, den Hinterlüftungsstrom 12 aktiv in diese Problemzonen umzuleiten, um so eine aktive Belüftung zu bewirken.

Ebenfalls hier in Fig. 5 dargestellt sind die in den Eckbereichen 25 und an den Vorsatzelementen 6 in deren Randbereichen 18 angeordneten Strömungsleitelemente 30 bzw. 32, die auch in den hier gezeigten vertikal verlaufenden Öffnungsbereichen 16 eine optimale Strömungsführung garantieren.

Die Ausbildung der Öffnungsbereiche 16 ist bei dieser Ausführungsform auf die Unstetigkeitsbereiche 14, also die Eckbereiche 25, an denen die Bauteilwand 1 an weitere Wände 20, den Boden 22 und die Decke 24 anschließt, begrenzt. Insbesondere sobald sich an der Bauteilwand 1 jedoch weitere Unstetigkeitsbereiche, beispielsweise Fensteranschlüsse, Balkenanschlüsse, Öffnungen etc. befinden, können auch hier bei Bedarf entsprechende Öffnungsbereiche 16 angeordnet werden, durch die Luft in den Hinterlüftungsraum 10 eindringen bzw. diesen verlassen kann.

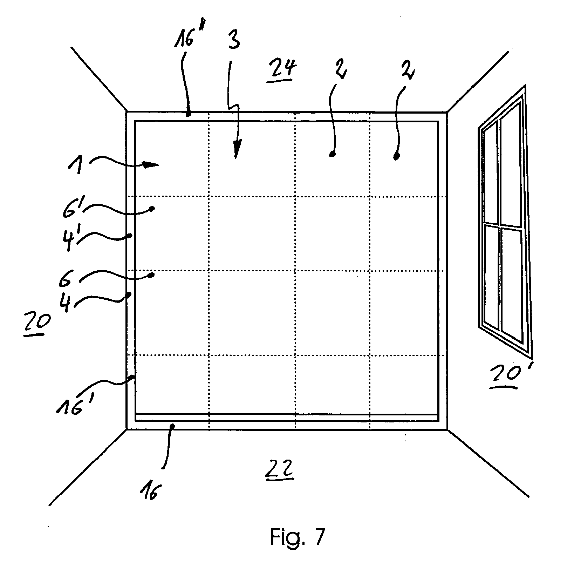

Fig. 7 zeigt eine weitere Ausführungsform der Vorrichtung zur Innenisolation einer Bauteilwand 1, die erfindungsgemäß aus einer Mehrzahl miteinander verbundener doppelschaliger Isolationsmittel 2 zur Bildung eines innendämmenden Isolationsaufbaus 3 zusammengesetzt wird. Insofern entspricht also der Aufbau der hier dargestellten doppelschaligen Isolationsmittel 2 im Wesentlichen dem zuvor beschriebenen Aufbau, so dass hier explizit darauf Bezug genommen wird. Jedoch werden erfindungsgemäß diese doppelschaligen Isolationsmittel 2 vorzugsweise am Stück auf die Baustelle geliefert und erst dort zu dem innendämmenden Isolationsaufbau 3 zusammengefügt. Dazu können die Isolationselemente 4 und die Vorsatzelemente 6 mit entsprechenden Verbindungsmitteln, beispielsweise Nut- und Federsystemen etc. (nicht dargestellt) versehen sein, um ein einfaches Fügen zu erlauben. Auch ist es natürlich möglich, das Vorsatzelement 6 so auszubilden, dass es über weitere Fügeelemente, beispielsweise aufspachtelbare Fugenbänder etc. zu einer homogenen Fläche weiter verarbeitet werden kann. Bei Bedarf ist es dagegen auch möglich, geeignete Öffnungsbereiche 16 auch an den Stoßstellen zwischen den einzelnen Vorsatzelementen 6 auszubilden, wenn dies der Be- und Entlüftung zuträglich ist.

Zur Ausbildung der Öffnungsbereiche 16, über die Luft zur Bildung des Hinterlüftungsstromes in den Hinterlüftungsraum 10 eindringen bzw. diesen verlassen kann, verfügen die Vorsatzelemente 6 vorzugsweise über geeignete Sollbruchelemente, die auf der Baustelle einfach vom Vorsatzelement 6 abgetrennt werden können, so dass sich die Öffnungsbereich 16 ausbilden. An den Stellen, an denen die Vorsatzelemente 6 mit anderen Vorsatzelementen 6' gefügt werden sollen, kann dann natürlich auf ein Entfernen dieser Sollbruchelemente verzichtet werden.

## Patentansprüche

1. Vorrichtung zur Innenisolation einer Bauteilwand (1), umfassend
wenigstens ein wenigstens doppelschaliges Isolationsmittel (2), mit
wenigstens einem Isolationselement (4), das auf die Innenseite der Bauteilwand (1) aufbringbar ist, und
wenigstens einem Vorsatzelement (6), das mittels wenigstens eines Abstandhalters (8) unter Bildung eines Hinterlüftungsraumes (10) derart an der zur Bauteilwand (1) abgewandten Seite des Isolationselementes (4) angeordnet oder anordbar ist, dass Luft unter Bildung eines Hinterlüftungsstromes (12) insbesondere bodenseitig in den Hinterlüftungsraum (10) eindringen und diesen insbesondere deckenseitig wieder verlassen kann.

2. Vorrichtung nach Anspruch 1,
**dadurch gekennzeichnet, dass**
wenigstens ein Vorsatzelement (6) wenigstens einen Öffnungsbereich (16) aufweist, über den die Luft in den Hinterlüftungsraum (10) eindringen und/oder diesen verlassen kann.

3. Vorrichtung nach Anspruch 1 oder 2,
**dadurch gekennzeichnet, dass**
an einem Unstetigkeitsbereich (14), insbesondere einem Eckbereich (25) zwischen dem Isolationselement (4) und einer Wand (20), einer Decke (24), einem Boden (22) oder dergleichen Anschlussbauteil, das Isolationselement (4) an diesen Unstetigkeitsbereich (14), insbesondere die Wand (20), die Decke (22), den Boden (24) oder das dergleichen Anschlussbauteil anschließt oder anschließbar ist und das Vorsatzelement (6) unter Bildung des Öffnungsbereiches (16) mit seinem Randbereich (18) von dem Unstetigkeitsbereich (14), insbesondere der Wand (20), der Decke (24), dem Boden (22) oder dem dergleichen Anschlussbauteil beabstandet ist.

4. Vorrichtung nach einem der vorangehenden Ansprüche,
**dadurch gekennzeichnet, dass**
in einem unteren, insbesondere bodenseitigen Bereich (21) der Vorrichtung insbesondere des Vorsatzelementes (6) ein Heizelement (26) derart ausgebildet und angeordnet ist, dass es zur Bildung eines aufsteigenden Hinterlüftungsstromes (12) die Lufttemperatur im unteren, insbesondere bodenseitigen Hinterlüftungsraum (10) anhebt.

5. Vorrichtung nach einem der vorangehenden Ansprüche, insbesondere Anspruch 4,
**dadurch gekennzeichnet, dass**
das Heizelement (26) derart ausgebildet und angeordnet ist, dass es die Lufttemperatur im unteren, insbesondere bodenseitigen Hinterlüftungsraum (10) zwischen 0,1° C und 5° C, insbesondere zwischen 0,1° C und 1°C anhebt.

6. Vorrichtung nach einem der vorangehenden Ansprüche,
**dadurch gekennzeichnet, dass**
auf der dem Hinterlüftungsraum (10) zugewandten Seite (5; 7) des Isolationselementes (4) und/oder des Vorsatzelementes (6) eine die Luftreibung des Hinterlüftungsstromes (12) reduzierende Oberfläche (28) ausgebildet ist.

7. Vorrichtung nach einem der vorangehenden Ansprüche,
**dadurch gekennzeichnet, dass**
im Hinterlüftungsraum (10) wenigstens ein Strömungsleitelement (30; 32; 34) zur Strömungsführung des Hinterlüftungsstromes (12) angeordnet ist.

8. Vorrichtung nach einem der vorangehenden Ansprüche, insbesondere Anspruch 7,
**dadurch gekennzeichnet, dass**
wenigstens ein Strömungsleitelement (30) wenigstens in einem Unstetigkeitsbereich (14), insbesondere einem Eckbereich (25) zwischen dem Isolationselement (4) und einer Wand (20), einer Decke (24), einem Boden (22) oder dergleichen Anschlussbauteil angeordnet ist.

9. Vorrichtung nach einem der vorangehenden Ansprüche, insbesondere Anspruch 7 oder 8, **dadurch gekennzeichnet, dass**
wenigstens ein Strömungsleitelement (30) einen strömungsführenden Auskleidungsbereich (31) aufweist, der den Unstetigkeitsbereich (14) wenigstens teilweise auskleidet.

10. Vorrichtung nach einem der vorangehenden Ansprüche, insbesondere einem der Ansprüche 7 bis 9,
**dadurch gekennzeichnet, dass**
wenigstens ein Strömungsleitelement (32) an wenigstens einem Randbereich (18) des Vorsatzelementes (6) ausgebildet oder angeordnet ist.

11. Vorrichtung nach einem der vorangehenden Ansprüche,
**dadurch gekennzeichnet, dass**
wenigstens ein Abstandshalter (8) wenigstens ein Strömungsleitelement (34) aufweist oder als Strömungsleitelement ausgebildet ist.

12. Vorrichtung nach einem der vorangehenden Ansprüche, insbesondere einem der Ansprüche 7 bis 11,
**dadurch gekennzeichnet, dass**
wenigstens ein Strömungsleitelement (34) zur Veränderung der Strömungsführung des Hinterlüftungsstromes (12) im Hinterlüftungsraum (10) insbesondere in seiner Position veränderbar ausgebildet und/oder angeordnet ist.

13. Vorrichtung nach einem der vorangehenden Ansprüche, insbesondere einem der Ansprüche 7 bis 12,
**dadurch gekennzeichnet, dass**
wenigstens ein Strömungsleitelement (34) derart ausgebildet und/oder angeordnet ist, dass es wenigstens einen Teil des Hinterlüftungsstromes (12) zu einem Unstetigkeitsbereich (14) und insbesondere einem Eckbereich zwischen dem Isolationselement (4) und einer Wand (20), einer Decke (24), einem Boden (22) oder dergleichen Anschlussbauteil und/oder zu einem Öffnungsbereich (16), über den die Luft den Hinterlüftungsraum (10) verlassen kann, leitet.

14. Vorrichtung nach einem der vorangehenden Ansprüche,
**dadurch gekennzeichnet,dass**
eine Mehrzahl an einzelnen wenigstens doppelschaligen Isolationsmitteln (2) zu einem Isolationsaufbau (3) zur Isolation der Bauteilwand (1) kombinierbar bzw. kombiniert ist.
